# EUROPEAN PATENT SPECIFICATION

(11) **EP 3 606 633 B1**
(45) Date of publication and mention of the grant of the patent: **13.01.2021**
(21) Application number: 18717130.1
(22) Date of filing: 28.03.2018
(51) Int. Cl.: B01D 12/00

(54) **DEVICE FOR THE SEPARATION OF A PRODUCT IN A LIQUID FRACTION AN IN A NON-LIQUID FRACTION**
VORRICHTUNG ZUR TRENNUNG EINES PRODUKTS IN EINE FLÜSSIGE FRAKTION UND EINE NICHTFLÜSSIGE FRAKTION
DISPOSITIF DE SÉPARATION D'UN PRODUIT DANS UNE FRACTION LIQUIDE ET DANS UNE FRACTION NON LIQUIDE

(30) Priority: 04.04.2017 BE 201705236
(43) Date of publication of application: 12.02.2020
(73) Proprietor: Organic Waste Systems, Verkort O.W.S., Naamloze Vennootschap, 9000 Gent (BE); Constructions Metalliques Julien, 6914 Heyd (BE)
(72) Inventor: SMIS, Piet Lodewijk M., 9890 Dikkelvenne (BE)
(74) Representative: Donné, Eddy
(86) International application number: PCT/IB2018/052128
(87) International publication number: WO 2018/185610

(56) References cited:
- CN-U- 202 540 782
- CN-U- 204 756 253
- DE-A1- 3 625 848
- DE-A1- 4 336 426
- JP-A- 2015 116 530

## Description

The present invention relates to a device for the separation of a product in a liquid fraction and in a non-liquid fraction.

In particular, the invention can be applied for the dewatering of the digestate that remains after industrial fermenting of organic flows such as for example the organic fraction of household waste, possibly after conditioning for improved dewaterability by addition of polymers or other additives.

It is known that organic waste can be converted into usable biogas by means of anaerobic fermenting, whereby the released biogas is recovered and the remaining digestate is either reusable as compost or soil additive, or given another purpose.

A problem that occurs in this process is that the digestate that remains has a water content that is too high and needs to be dewatered.

Traditionally, to this end a compressive screw press, with variable thread is used which compresses the digestate and results in press water and in a solid press cake.

However, this dewatering technique has a number of major disadvantages:
- high cost of wear and tear following rapid wear and damage of the screw and the dewatering sieves caused by the presence of sand, pieces of glass, metal components and stones in the digestate;
- a high power consumption in the form of electricity;
- configuration of the machine is difficult because the thread depends on the composition of the digestate and this composition changes as a function of the supplied waste flows;
- changing capacity, depending on the level of wear and the composition of the digestate;
- a lot of sludge ends up in the press water;
- quality of the press water not constant, in particular as a function of the level of wear.

Other dewatering techniques such as a filter press on conveyor, or a chamber filter press, cannot be used optimally because of the nature of the digestate from household solid waste: a thick substance which in addition to sludge contains different types of particles such as stone, shards of glass or metal of sometimes considerable dimensions, for example up to 6 cm in size.

In a more general sense, the purpose of the invention is the separation of any product in a liquid fraction and a solid fraction, when the irregularities in the product make existing techniques less suitable.

US 8393265 B2 describes a device that shows characteristics of a thick matter pump, a sieve and a press. A press plunger presses a thick matter into a cylindrical press chamber, in which the matter is compressed by the press plunger to a set pressure.

The liquid matter is hereby discharged through lateral perforations in the press chamber. On termination of the press phase, the chamber is opened on the other side, and the press cake is pressed out by the press plunger, after which the pressed material is further discharged and collected. The press plunger is then withdrawn from the dewatering chamber, such that its entry is free and new matter can flow in this chamber.

A disadvantage of this device is that the various actions occur separately and separated in time, more specifically the filling of the dewatering chamber, the separation of the liquid mass by compression, the removal of the press cake and the withdrawal of the press plunger, which lends itself less to a continuous processing process.

Another disadvantage of this device is that the press plunger moves in and out of the perforated press chamber resulting in wear and tear of the plunger and press chamber as well as other problems.

The document CN 202 540 782 U discloses a dewatering device with a counter press plate that is pressed against the device by a coil spring.

The purpose of the present invention is to provide a solution to said and other disadvantages because it provides for a new device whereby the device for the supply under pressure of the product to be dewatered or the pump part is separate from the device for the separation of the product in a liquid and in a solid fraction or the press part.

The pump part comprises a transport system that sucks in the product from a barrel or supply device such as for example digestate from a fermenter and delivers this under pressure in a transport zone. This transport system is preferably volumetric. The product put under pressure flows to the press part. There it flows through a press zone with lateral perforations where the liquid matter is discharged through these lateral perforations and in this press zone a relatively solid press cake of this pressed product is formed.

Due to the pressure of the incoming product, the press cake is pushed towards the exit of this press zone, where it exits through the extension thereof. The exit of the press zone is provided with a controlled recoiling counter pressure system that pushes against the exiting press cake. This counter pressure system restricts the exit speed of the press cake of pressed material and exercises such pressure, that the product pressure in the press zone remains within the desired limits to obtain the intended separation of liquid fraction and solid fraction.

When the counter pressure system is recoiled over a certain length and a press cake with pressed material with a certain length has come out of the press zone, the exiting press cake needs to be removed and the counter pressure system moved back in the direction of the outlet of the press zone. To this end, the supply at the press part of fresh product under pressure is temporarily stopped, either by temporarily stopping the pump device, or by closing the channel between the pump part and the press part.

The counter pressure of the counter pressure system is then lifted and the exited press cake is removed from the exit, after which the counter pressure system is able to move back as far as possible to the exit of the press zone. As soon as the counter pressure system can give sufficient counter pressure again, either because it pushes against the rest of the press cake of exited product, or by pushing against the end of the press zone, fresh product can again be supplied under pressure by the pump part and the counter pressure system can start its controlled recoil action again.

An advantage of this device is that it allows for a semi-continuous process, whereby the supply of the fresh product at the press part, the separation of the liquid fraction and of the solid fraction in the press part and the discharge of the solid fraction from the press part can be done simultaneously and whereby the pressures required for each of these steps are generated by one and the same pump device.

These steps can be done simultaneously by the regulating operation of the counter pressure system, which ensures that the required pressures in the press part are retained, while the formed press cake can still exit. The process only needs to be briefly interrupted for the regular removing of the exited press cake and the returning to the front of the counter pressure system.

A disadvantage remains that both functions are still not completely uncoupled and the slowest function, either the capacity of the pump part, or the capacity of the press part, determines the speed for the semi-continuous process.

However, the uncoupling of pump part and press part allow one or several parallel set up pump parts as described above, to supply product under pressure to one or several parallel set up press parts as described above, each with their own press zone and counter pressure system. It may be recommended to place a valve after each pump part and/or to place a valve in front of every press part to optimise the operation of the system.

The advantage of several pump parts is that a more continuous and greater supply of fresh product can be obtained. The advantage of several press parts is that a greater press capacity can be obtained. There are various operating possibilities: in a first method the semi-continuous operation of every press part can occur synchronously with the other press parts, in a second method the various press parts can be done with fixed phase shifts from each other, and in a third method the various press parts are operated entirely independently from each other.

Preferably the form of the press part is cylindrical, but this can also be conical, i.e. show an increasing or decreasing diameter in the movement direction of the product.

Preferably the perforations in the press zone have a conical shape whereby the diameter of the perforations on the inside of the dewatering zone is smaller than the diameter of the perforations on the outside of the press zone.

An advantage of this conical shape is that the perforations are less sensitive for long-term blockages. Parts that are pressed in from the press zone, do not get stuck as they are forced to the broader part of the perforation by the exiting liquid.

With the intention of better showing the characteristics of the invention, hereinafter, by way of an example without any limiting nature, a number of preferred embodiments are described of a device according to the invention for the dewatering of digestate that is conditioned, or not, for improved dewaterability by addition of additives, with reference to the accompanying drawings, wherein:
figure 1 schematically and in cross-section shows a device for the dewatering of digestate according to the invention with one pump part and one press part () ;
figures 1a, 1b, 1c and 1d show various phases of the press process and of the removal of the press cake;
figure 2 in cross-section shows a variation of figure 1 but now with one pump part and two press parts;
figure 3 in cross-section shows a perforation of the perforated part of the dewatering zone.

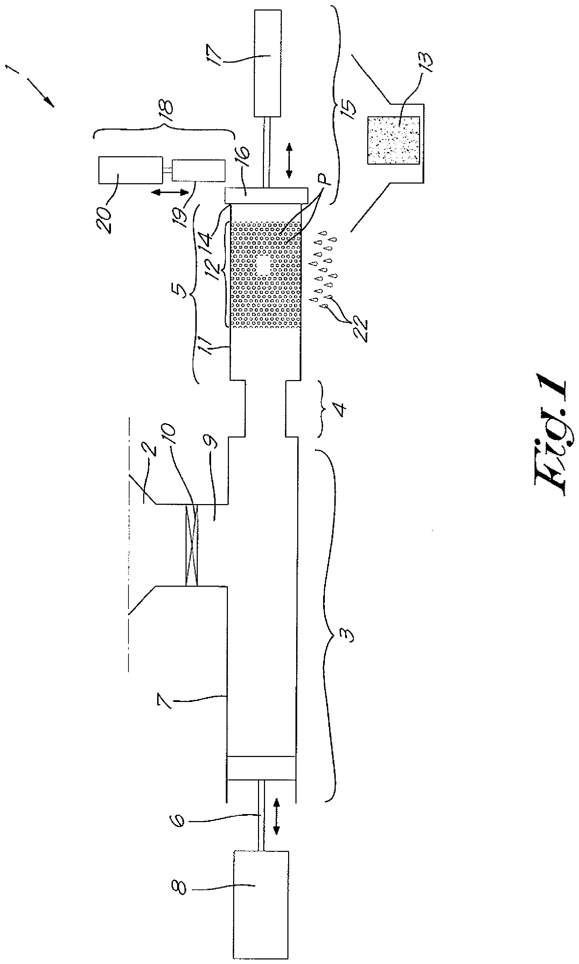

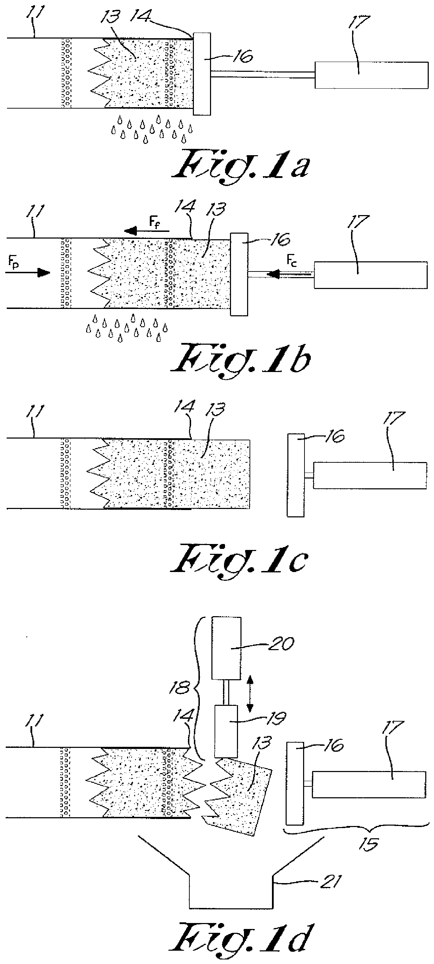

Figure 1 schematically shows a device 1 for the dewatering of digestate 2, consisting of one pump part 3, a transport zone 4 and one press part 5. The pump part 3 consists of a pump piston 6 that moves in a pump cylinder 7 and is driven by a drive cylinder 8. The product is supplied to the pump cylinder 7 from a supply zone 9 when the shutoff valve 10 is opened and the pump piston 6 moves back such that the digestate 2 is sucked into the pump cylinder 7. The sucked in amount of digestate 2 is then pumped by the pump piston 6 under pressure via the transport zone 4 to the press part 5, whereby the shutoff valve 10 is closed. The transport zone can have various forms, such as a transport pipe, a collector or a transition piece or can be non-existent if the pump part is directly connected to the press part.

The press part consists of a cylindrical tube 11 which comprises a zone 12 with lateral wall perforations (P). During the movement of the digestate 2 from left to right through this zone, due to the pressure difference across the perforations from the inside to the outside, water or liquid 22 will exit through the perforations P and thus during the movement of the product through the cylindrical tube 11 a cake of dewatered digestate 13 will be formed in this cylindrical tube 11. This cake 13 is forced toward the open end 14 of the cylindrical tube 11 by the present pressure. At the open end 14 of the cylindrical tube 11, a counter pressure system 15 pushes against the exiting cake of pressed digestate.

The counter pressure system 15 consists of a counter pressure plate 16 that is powered by a cylinder 17. The counter pressure plate 16 recoils slowly and in a controlled manner while continuing to exercise a counterforce on the exiting press cake 13, such that the pressure in the cylindrical tube 11 remains sufficiently high to obtain a good liquid separation through the perforations of the cylindrical tube 11 and the press cake 13 does not exit sooner than desired.

Figure 1a shows how in a first phase a press cake 13 of dewatered digestate 13 forms against the counter pressure plate 16 at the open end 14 of the cylindrical tube 11.

Figure 1b shows how in a second phase the press cake 13 exits from left to right and the counter pressure plate 16 also moves from left to right. During this movement the counter pressure plate exercises a counter pressure force Fc from right to left. The balance of forces is formed by on the one hand the driving force Fp from left to right, i.e. the pump pressure * the surface area of the cross-section of the cylindrical tube 11, and on the other hand the counter pressure force from right to left exercised on the exiting press cake 13 by the counter pressure plate 16 and the frictional force Ff from right to left resulting from the friction of the press cake 13 against the wall of the cylindrical tube 11.

When the counter pressure plate 16 is located at a distance, which can be chosen, from the free outlet of the cylindrical tube 11, the pump operation of the pump part 1 is temporarily halted by stopping the pump's drive cylinder 8. This means the press cake 13 will not exit any further.

Figure 1c shows how in a third phase the counter pressure plate 16 of the counter pressure system 15 has moved further to the right, such that now no pressure is exercised anymore on the press cake 13. The press cake 13 will then spontaneously break off and fall down in a collector 21, or be actively removed from the flow path of the digestate 2 by a mechanical separator 18.

Figure 1d shows the operation of the mechanical separator 18 which consists of a ram 19 powered by a drive cylinder 20. The ram 19 moves laterally on the product direction and pushes against the exited press cake 13 to remove it. The ram 19 then returns to its resting position outside the flow path of the product and outside the volume within which the counter pressure device 15 moves.

The counter pressure plate 16 of the counter pressure device 15 is then moved as much as possible to the left until the desired counter pressure is achieved. The counter pressure plate 16 hereby presses against a remainder of the press cake 13 that is still sticking out of the cylindrical tube 11 or against the end of the dewatering cylinder. As soon as the counter pressure plate 16 has achieved the desired position, the pump operation of the pump part 1 can be resumed again. This will result in the cycle described above to repeat itself, more specifically the dewatering of the digestate supplied under pressure during the transport movement from left to right, the forming of a press cake, the controlled exit of the press cake, and the removal of the press cake 13.

When the pump piston 6 has travelled its complete stroke from left to right, the pump operation is interrupted to supply fresh digestate again to the pump cylinder 7 through the shutoff valve 10 while the pump piston is moved from right to left. There is no movement hereby in the press part 5 until the pump operation is started again and the counter pressure system 15 remains idle.

Optionally, a valve is provided in the transport zone 4 or in the cylindrical tube 11. When the pump piston moves from right to left (to supply fresh digestate), it can prevent product from flowing back from the transport zone 4 or from the press part 5 or air from being sucked in through the perforations of the cylindrical tube 11.

Optionally, the operation of the counter pressure system 15 can be adjusted in the sense that the counter pressure plate 16 does not move uniformly from left to right, but periodically stops or even briefly goes back from right to left in between and this with varying counter pressures. The purpose is to obtain a better and more complete dewatering of digestate in the dewatering zone. In particular this may also be necessary to form a firm press cake 13 toward the open end of the cylindrical tube 11 upon the initial start of the press.

Optionally, the counter pressure system is made such that it can also partially penetrate into the cylindrical tube 11 or perforated zone 12 to thus obtain a better pressing.

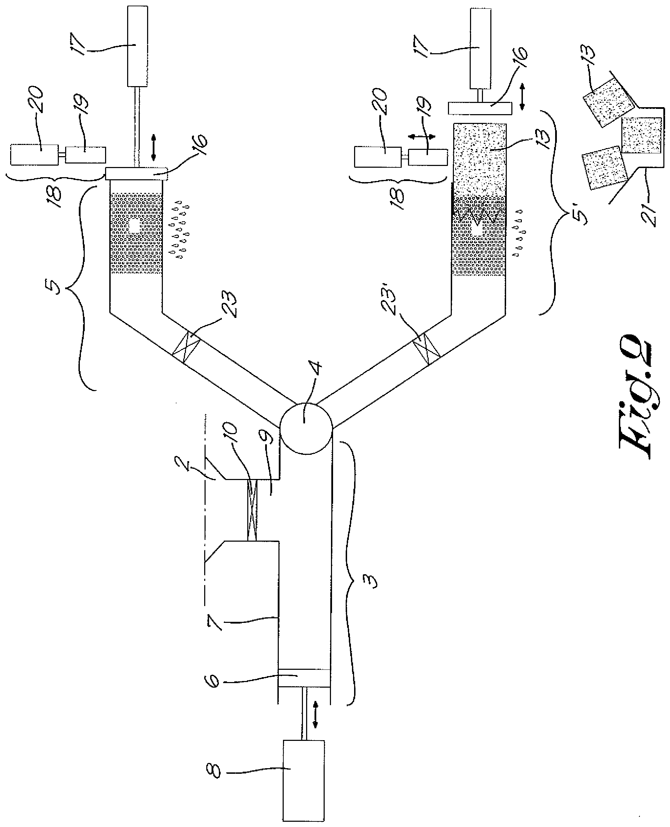

Figure 2 shows a variant of the device for the dewatering of digestate according to the same operating principle as the device of figure 1, but consisting of one pump part 3 and two press parts 5 and 5'. As shown in the embodiment of figure 1, fresh digestate is supplied to the transport zone 4 under pressure by the pump part. In this case, this transport zone consists of a manifold from where the digestate is supplied to each of the two press parts 5 and 5' possibly via shut-off valves 23 and 23'. These shut-off valves are not necessary when the semi-continuous operation of the press parts 5 and 5' is synchronous.

When the operation of the press parts is not synchronous, for example with a phase shift of 180°, the shut-off valve 23 is closed at the moment when the supply of product under pressure to the press device 5 needs to be stopped with a view to the removal of the exited press cake. However, the pump device 3 continues to supply product under pressure to the second press device 5' via the opened shut-off valve 23'.

Idem ditto, the shut-off valve 23' is closed when the cake is removed from the second press device 5' and meanwhile the press device 5 can be fed via the opened shut-off valve 23.

In the shown position in figure 2, the operation of the press parts is not synchronous. The press part 5 receives a supply of fresh digestate through the pump device 3 via the opened shut-off valve 23 and the formed pressed press cake gradually exits from left to right. The press part 5' receives no supply of fresh digestate now that the shut-off valve 23' is closed and the exited press cake is removed by the mechanical separator 18'.

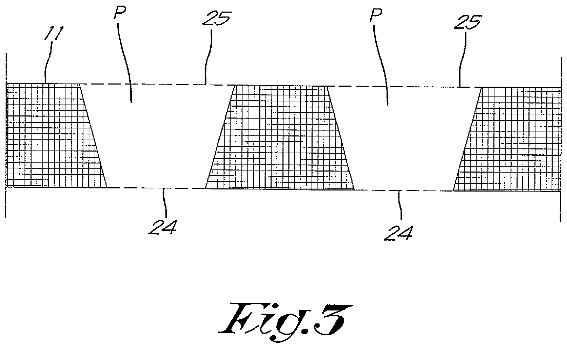

Figure 3 shows a cross-section of perforations (P) in the cylindrical tube 11 on the level of the perforation zone 12, in which the conical shape of the perforation (P) is visible with a smaller diameter 24 on the inside of the cylindrical tube than the diameter 25 on the outside of the cylindrical tube 11.

It goes without saying that the form of the supply and discharge pipes and of the press zones does not necessarily have to be cylindrical in cross-section, but this is more advantageous to withstand the maximum occurring pressures.

Obviously, the transport pump can also be a piston pump but also a helicoidal pump for example, and a device for the dewatering of digestate according to the invention can also be used for the dewatering of another viscous thick matter than a digestate of a fermentation.

The present invention is by no means limited to the embodiments described as an example and shown in the drawings, but a device for the separation of a product in a liquid fraction and in a non-liquid fraction can be realised in all kinds of forms and dimensions without departing from the scope of the invention as described in the following claims.

## Claims

1. Device for the separation of a product (2) in a liquid fraction (22) and in a non-liquid fraction (13),
whereby it consists of a transport pump (3) which sucks in the product (2) from a barrel or supply device (9) and pumps it under pressure to a transport zone (4) which ends in a cylindrical tube (11) provided with a dewatering zone (12) with lateral perforations, whereby during the transport of the product through the cylindrical tube from the left to the right a part of the liquid fraction of the product (2) is forced out through the perforations (P) of the press zone (12) as a result of the prevalent overpressure such that during the transport movement in the cylindrical tube (11) a press cake (13) is created which due to the pump pressure is forced further through the cylindrical tube (11) to the exit thereof, whereby the exit of the pressed press cake (13) from the cylindrical tube (11) is restricted by a controlled recoiling counter pressure plate (16) which when making room for the exiting dewatered press cake (13) exercises a controlled counter force on this press cake such that the pressure at the entry of the cylindrical tube remains within the desired limits to thus obtain a good separation of liquid (16) and a solid dewatered press cake (13) in the cylindrical tube (11), **characterised in that** the counter pressure plate (16) moving in a controlled way not only recoils, but sometimes also stops in a controlled way or even moves against the movement of the press cake (13) and this with varying forces, after which in a following phase the counter pressure plate (16) is moved further to the right in the direction of the moving pressed press cake (13), such that now no more pressure is exercised on the press cake (13), and the press cake (13) will subsequently spontaneously break off and fall down in a collector (21), or is actively removed from the flow path of the digestate (2) by a mechanical separator (18) with a movable ram (19, 19') and this in a direction that is completely or partly perpendicular to the direction of the flow path of the product.

2. Device according to claim 1, **characterised in that** the transport pump is specifically a volumetric pump.

3. Device according to claim 1 or according to claim 2, **characterised in that** the press part (5) can be separated from the pump part (3) because a valve is provided in the transport zone (4) or in the cylindrical tube (11).

4. Device according to any one of the previous claims, **characterised in that** the pump part 3 is directly connected to the press part (5).

5. Device according to any of the previous claims, **characterised in that** the operation of the counter pressure system (15) is adjusted in the sense that the counter pressure plate (16) does not move uniformly from left to right, but periodically stops or even briefly goes back from right to left in between and this with varying counter pressures.

6. Device according to any one of the previous claims **characterised in that** the counter pressure system is such that it can also partially penetrate into the cylindrical tube 11 or perforated zone 12 to thus obtain a better pressing.

7. Device according to any one of the previous claims, **characterised in that** the press part (5) is divided over two or more parallel press parts (5, 5'), each with its own cylindrical tube (11, 11') with perforated zone (12, 12') and with its own counter pressure system (15, 15'). The press parts are fed by a shared pump part (3) that supplies the product via a transport zone (4) with branches to each of the press parts (5, 5'), whereby the press parts are operated synchronously.

8. Device according to claim 7, **characterised in that** the various press parts are operated with a certain time shift to thus obtain a more uniform operation of the system.

9. Device according to any one of the previous claims, **characterised in that** the pump part (3) is divided over two or more parallel pump parts (3, 3'), which each end in the transport zone (4) to thus obtain a greater pump capacity.

10. Device according to claim 9, **characterised in that** between each pump part (3, 3') and the transport zone (4) valves are built in to prevent interaction between the pump parts and to thus obtain a more continuous product supply to the press parts.

11. Device according to any one of the previous claims, **characterised in that** the perforations (P) in the cylindrical press zone (11) have a conical shape whereby the diameter of the perforations on the inside (24) of the press zone (12) is smaller than the diameter of the perforations on the outside (25) of the press zone (12).

12. Device according to any one of the claims 1 to 10, **characterised in that** the perforations (P) in the press zone (11) are slit shaped.

13. Device according to any one of the previous claims **characterised in that** the press zone (11) is not cylindrical but broadens towards the outlet.

14. Device according to any one of the claims 1 to 12, **characterised in that** the press zone (11) is not cylindrical but gets narrower toward the outlet.

15. Device according to any one of the previous claims, **characterised in that** the cross section of the press zone (11) is not round but polygonal.

16. Device according to any one of the previous claims, **characterised in that** a controlled interaction exists between the pressure or the flow of the pump part and the controlled counter pressure or speed of the counter pressure system of the press part.

## Patentansprüche

1. Vorrichtung zum Trennen eines Produkts (2) in eine flüssige Fraktion (22) und eine nicht flüssige Fraktion (13), wobei sie aus einer Transportpumpe (3) besteht, die das Produkt (2) aus einem Zylinder oder einer Zufuhrvorrichtung (9) ansaugt und es unter Druck zu einer Transportzone (4) pumpt, die in einem zylindrischen Rohr (11) endet, das mit einer Entwässerungszone (12) mit seitlichen Perforationen versehen ist, wobei während des Transports des Produkts durch das zylindrische Rohr von der Linken zur Rechten ein Teil der Flüssigkeitsfraktion des Produkts (2) aufgrund des vorherrschenden Überdrucks durch die Perforationen (P) der Presszone (12) herausgedrängt wird, sodass während der Transportbewegung in dem zylindrischen Rohr (11) ein Presskuchen (13) erzeugt wird, der aufgrund des Pumpendrucks weiter durch das zylindrische Rohr (11) zu dessen Ausgang gedrückt wird, wodurch der Austritt des gepressten Presskuchens (13) aus dem zylindrischen Rohr (11) durch eine kontrollierte Rückstoß-Gegendruckplatte (16) begrenzt wird, die, wenn sie Platz schafft für den austretenden entwässerten Presskuchen (13), eine kontrollierte Gegenkraft auf diesen Presskuchen ausübt, sodass der Druck am Eingang des zylindrischen Rohrs innerhalb der gewünschten Grenzen bleibt, um so eine gute Trennung von Flüssigkeit (16) und festem entwässertem Presskuchen (13) in dem zylindrischen Rohr (11) zu erzielen, **dadurch gekennzeichnet, dass** die Gegendruckplatte (16), die sich kontrolliert bewegt, nicht nur einen Rückstoß ausübt, sondern manchmal auch kontrolliert stoppt oder sich sogar gegen die Bewegung des Presskuchens (13) bewegt, und zwar mit unterschiedlichen Kräften, wonach in einer folgenden Phase die Gegendruckplatte (16) weiter nach rechts in Richtung des sich bewegenden gepressten Presskuchens (13) bewegt wird, sodass nun kein Druck mehr auf den Presskuchen (13) ausgeübt wird und der Presskuchen (13) anschließend spontan abbricht und in einen Sammler (21) herabfällt; oder durch einen mechanischen Abscheider (18) mit einem beweglichen Stempel (19, 19') aktiv aus dem Strömungsweg des Gärrests (2) entfernt wird, und zwar in einer Richtung, die ganz oder teilweise senkrecht zur Richtung des Strömungsweges des Produkts liegt.

2. Vorrichtung nach Anspruch 1, **dadurch gekennzeichnet, dass** die Transportpumpe speziell eine Volumenpumpe ist.

3. Vorrichtung nach Anspruch 1 oder 2, **dadurch gekennzeichnet, dass** der Pressenteil (5) vom Pumpenteil (3) getrennt werden kann, weil in der Transportzone (4) oder im zylindrischen Rohr (11) ein Ventil vorgesehen ist.

4. Vorrichtung nach einem der vorhergehenden Ansprüche, **dadurch gekennzeichnet, dass** der Pumpenteil 3 direkt mit dem Pressenteil (5) verbunden ist.

5. Vorrichtung nach einem der vorhergehenden Ansprüche, **dadurch gekennzeichnet, dass** der Betrieb des Gegendrucksystems (15) in dem Sinne eingestellt ist, dass sich die Gegendruckplatte (16) nicht gleichmäßig von links nach rechts bewegt, sondern periodisch stoppt oder dazwischen sogar kurz von rechts nach links zurückgeht, und zwar mit unterschiedlichen Gegendrücken.

6. Vorrichtung nach einem der vorhergehenden Ansprüche, **dadurch gekennzeichnet, dass** das Gegendrucksystem derart ist, dass es auch teilweise in das zylindrische Rohr 11 oder die perforierte Zone 12 eindringen kann, um so ein besseres Pressen zu erzielen.

7. Vorrichtung nach einem der vorhergehenden Ansprüche, **dadurch gekennzeichnet, dass** das Pressenteil (5) über zwei oder mehr parallele Pressenteile (5, 5') mit jeweils einem eigenen zylindrischen Rohr (11, 11') mit perforierter Zone (12, 12') und mit eigenem Gegendrucksystem (15, 15') aufgeteilt ist. Die Pressenteile werden von einem gemeinsamen Pumpenteil (3) gespeist, der das Produkt über eine Transportzone (4) mit Abzweigungen zu jedem der Pressenteile (5, 5') versorgt, wobei die Pressenteile synchron betrieben werden.

8. Vorrichtung nach Anspruch 7, **dadurch gekennzeichnet, dass** die verschiedenen Pressenteile mit einer bestimmten Zeitverschiebung betrieben werden, um so einen gleichmäßigeren Betrieb des Systems zu erzielen.

9. Vorrichtung nach einem der vorhergehenden Ansprüche, **dadurch gekennzeichnet, dass** der Pumpenteil (3) über zwei oder mehr parallele Pumpenteile (3, 3') aufgeteilt ist, die jeweils in der Transportzone (4) enden, um so eine größere Pumpenkapazität zu erzielen.

10. Vorrichtung nach Anspruch 9, **dadurch gekennzeichnet, dass** zwischen jedem Pumpenteil (3, 3') und der Transportzone (4) Ventile eingebaut sind, um eine Wechselwirkung zwischen den Pumpenteilen zu verhindern und somit eine kontinuierlichere Produktversorgung der Pressenteile zu erzielen.

11. Vorrichtung nach einem der vorhergehenden Ansprüche, **dadurch gekennzeichnet, dass** die Perforationen (P) in der zylindrischen Presszone (11) eine konische Form haben, wobei der Durchmesser der Perforationen an der Innenseite (24) der Presszone (12) kleiner ist als der Durchmesser der Perforationen an der Außenseite (25) der Presszone (12).

12. Vorrichtung nach einem der Ansprüche 1 bis 10, **dadurch gekennzeichnet, dass** die Perforationen (P) in der Presszone (11) schlitzförmig sind.

13. Vorrichtung nach einem der vorhergehenden Ansprüche, **dadurch gekennzeichnet, dass** die Presszone (11) nicht zylindrisch ist, sondern sich zum Auslass hin erweitert.

14. Vorrichtung nach einem der Ansprüche 1 bis 12, **dadurch gekennzeichnet, dass** die Presszone (11) nicht zylindrisch ist, sondern zum Auslass hin schmaler wird.

15. Vorrichtung nach einem der vorhergehenden Ansprüche, **dadurch gekennzeichnet, dass** der Querschnitt der Presszone (11) nicht rund, sondern polygonal ist.

16. Vorrichtung nach einem der vorhergehenden Ansprüche, **dadurch gekennzeichnet, dass** eine kontrollierte Wechselwirkung zwischen dem Druck oder dem Durchfluss des Pumpenteils und dem kontrollierten Gegendruck oder der kontrollierten Geschwindigkeit des Gegendrucksystems des Pressenteils besteht.

## Revendications

1. Dispositif qui est destiné à la séparation d'un produit (2) en une fraction liquide (22) et en une fraction non liquide (13), dans lequel il est constitué par une pompe de transport (3) qui aspire le produit (2) à partir d'un cylindre ou d'un dispositif d'alimentation (9) et qui le soumet à un pompage sous pression dans la direction d'une zone de transport (4) qui aboutit dans un tube cylindrique (11) qui est équipé d'une zone d'égouttage (12) qui comprend des perforations latérales, dans lequel, au cours du transport du produit à travers le tube cylindrique, depuis la gauche vers la droite, une partie de la fraction liquide du produit (2) est forcée à travers les perforations (P) de la zone de compression (12) suite à la surpression qui prévaut d'une manière telle qu'au cours du mouvement de transport dans le tube cylindrique (11), on obtient un gâteau de presse (13) qui, sur base de la pression de la pompe, est forcé ultérieurement à travers le tube cylindrique (11) en direction de la sortie de ce dernier, dans lequel la sortie du gâteau de presse comprimé (13) par rapport au tube cylindrique (11) est restreinte par une plaque de contre pression du type à recul contrôlé (16) qui, lorsqu'elle fait de la place pour le gâteau de presse égoutté (13) en train de sortir, exerce une contre pression contrôlée sur ce gâteau de presse, d'une manière telle que la pression à l'entrée du tube cylindrique reste en deçà des limites désirées pour ainsi obtenir une bonne séparation d'un liquide (16) et d'un gâteau de presse égoutté solide (13) dans le tube cylindrique (11), **caractérisé en ce que** la plaque de contre pression (16) qui est soumise à un déplacement d'une manière contrôlée, non seulement recule, mais parfois également s'arrête d'une manière contrôlée, voire est mise en mouvement à l'encontre du mouvement du gâteau de presse (13) et ceci avec des forces qui varient ; après quoi, dans une phase suivante, la plaque de contre pression (16) fait l'objet d'un déplacement ultérieur vers la droite dans la direction du gâteau de presse comprimé (13) en train d'être déplacé, d'une manière telle qu'à présent plus aucune pression ne s'exerce sur le gâteau de presse (13), et le gâteau de presse (13) sera par la suite rompu et tombera dans un collecteur (21) ou bien est retiré de manière active de la voie d'écoulement du produit de digestion (2) par l'intermédiaire d'un séparateur mécanique (18) qui comprend un piston mobile (19, 19)', et ceci dans une direction qui est complètement ou partiellement perpendiculaire à la direction de la voie d'écoulement du produit.

2. Dispositif selon la revendication 1, **caractérisé en ce que** la pompe de transport représente de manière spécifique une pompe volumétrique.

3. Dispositif selon la revendication 1 ou selon la revendication 2, **caractérisé en ce que** la partie de compression (5) peut être séparée de la partie de pompage (3) étant donné que l'on prévoit une valve dans la zone de transport (4) ou dans le tube cylindrique (11).

4. Dispositif selon l'une quelconque des revendications précédentes, **caractérisé en ce que** la partie de pompage (3) est reliée de manière directe à la partie de compression (5).

5. Dispositif selon l'une quelconque des revendications précédentes, **caractérisé en ce que** la mise en service du système de contre pression (15) est réglée dans un sens tel que la plaque de contre pression (16) n'est pas soumise à un déplacement uniforme depuis la gauche vers la droite, mais s'arrête de manière périodique, voir recule entre-temps de manière brève depuis la droite vers la gauche, et ceci avec des contre pressions qui varient.

6. Dispositif selon l'une quelconque des revendications précédentes, **caractérisé en ce que** le système de contre pression est tel qu'il peut également pénétrer en partie dans le tube cylindrique (11) ou dans la zone perforée (12) pour ainsi obtenir une meilleure compression.

7. Dispositif selon l'une quelconque des revendications précédentes, **caractérisé en ce que** la partie de compression (5) est subdivisée en deux parties de compression parallèles ou plus (5, 5'), chacune avec son propre tube cylindrique (11, 11') qui comprend une zone perforée (12, 12') et avec son propre système de contre pression (15, 15'), les parties de compression étant alimentées par l'intermédiaire d'une partie de pompage partagée (3) qui alimente le produit via une zone de transport (4) qui se ramifie en direction de chacune des parties de compression (5, 5'), dans lequel les parties de compression sont mises en service de manière synchrone.

8. Dispositif selon la revendication 7, **caractérisé en ce que** les différentes parties de compression sont mises en service avec un certain décalage dans le temps de façon à ainsi obtenir une mise en œuvre plus uniforme du système.

9. Dispositif selon l'une quelconque des revendications précédentes, **caractérisé en ce que** la partie de pompage (3) est subdivisée en deux parties de pompage parallèles ou plus (3, 3'), chacune aboutissant dans la zone de transport (4) afin d'obtenir de cette manière une capacité de pompage supérieure.

10. Dispositif selon la revendication 9, **caractérisé en ce que**, entre chaque partie de pompage (3, 3') et la zone de transport (4) on incorpore des valves dans le but d'empêcher une interaction entre les parties de pompage et dans le but d'obtenir de cette manière une alimentation du produit plus continue dans la direction des parties de compression.

11. Dispositif selon l'une quelconque des revendications précédentes, **caractérisé en ce que** les perforations (P), dans la zone de compression cylindrique (11), possèdent une configuration de forme conique, dans lequel le diamètre des perforations sur le côté interne (24) de la zone de compression (12) est inférieur au diamètre des perforations sur le côté externe (25) de la zone de compression (12).

12. Dispositif selon l'une quelconque des revendications 1 à 10, **caractérisé en ce que** les perforations (P), dans la zone de compression (11) possèdent une configuration en forme de fente.

13. Dispositif selon l'une quelconque des revendications précédentes, **caractérisé en ce que** la zone de compression (11) n'est pas cylindrique, mais s'élargit dans la direction de la sortie.

14. Dispositif selon l'une quelconque des revendications 1 à 12, **caractérisé en ce que** la zone de compression (11) n'est pas cylindrique, mais se rétrécit dans la direction de la sortie.

15. Dispositif selon l'une quelconque des revendications précédentes, **caractérisé en ce que** la section transversale de la zone de compression (11) n'est pas ronde, mais polygonale.

16. Dispositif selon l'une quelconque des revendications précédentes, **caractérisé en ce qu'**une interaction contrôlée existe entre la pression ou l'écoulement de la partie de pompage et la contre pression ou la vitesse contrôlée du système de contre pression de la partie de compression.
